# EUROPÄISCHE PATENTSCHRIFT

(11) **EP 0 807 341 B1**
(45) Veröffentlichungstag und Bekanntmachung des Hinweises auf die Patenterteilung: **14.07.1999**
(21) Anmeldenummer: 96901221.0
(22) Anmeldetag: 31.01.1996
(51) Int. Cl.: H04B 10/22

(54) **VORRICHTUNG ZUR INFORMATIONSÜBERTRAGUNG MIT OPTISCHEN SIGNALEN ZWISCHEN EINER SENDEEINHEIT UND EINER HIERZU BEWEGLICHEN EMPFANGSEINHEIT**
DEVICE FOR DATA TRANSMISSION WITH OPTICAL SIGNALS BETWEEN A TRANSMISSION AND A RECEPTION UNIT
DISPOSITIF DE TRANSMISSION DE DONNEES A L'AIDE DE SIGNAUX OPTIQUES ENTRE UNE UNITE EMETTRICE ET UNE UNITE RECEPTRICE MOBILE A CET EFFET

(30) Priorität: 31.01.1995 DE 19502989
(43) Veröffentlichungstag der Anmeldung: 19.11.1997
(73) Patentinhaber: Schleifring und Apparatebau GmbH, 82256 Fürstenfeldbruck (DE)
(72) Erfinder: POISEL, Hans, D-91227 Leinburg (DE); DOLLHOFER, Kurt, D-82275 Emmering (DE); GÜMPELEIN, Reinhold, D-91572 Leutershausen (DE)
(74) Vertreter: Münich, Wilhelm, Dr.
(86) Internationale Anmeldenummer: DE9600135
(87) Internationale Veröffentlichungsnummer: WO9624202

(56) Entgegenhaltungen:
- EP-A- 0 218 739
- DE-A- 3 821 814
- DE-A- 4 421 616
- PATENT ABSTRACTS OF JAPAN vol. 015, no. 278 (P-1227), 15.Juli 1991 & JP,A,03 094206 (AGENCY OF IND SCIENCE & TECHNOL), 19.April 1991,
- PATENT ABSTRACTS OF JAPAN vol. 008, no. 119 (E-248), 5.Juni 1984 & JP,A,59 033943 (HITACHI SEISAKUSHO KK), 24.Februar 1984,

## Beschreibung

### Technisches Gebiet

Die Erfindung bezieht sich auf eine Vorrichtung zur Informationsübertragung mit optischen Signalen zwischen einer Sende- und einer Empfangseinheit, die relativ zueinander bewegbar sind. Die Kontur der Empfangseinheit ist entlang der sich durch die Relativbewegung der Sendeeinheit ergebenden Trajektorie ausgebildet und weist wenigstens einen, die optischen Signale in Fluoreszenzlicht umsetzenden Materialstrang auf. Der Materialstrang ist mit einer Detektoreinheit verbunden, so daß die auf die Materialstrangoberfläche auftreffenden optischen Signale innerhalb des Materialstrangs Fluoreszenzlichtsignale hervorrufen, die im Wege einer internen Lichtführung zu einer Detektoreinheit geführt werden.

### Stand der Technik

Optische Informationsübertragungen der vorgenannten Gattung tritt vorzugsweise an Geräteteilen auf, die sich relativ zueinander bewegen und zwischen denen ein Datenaustausch ermöglicht werden soll.

Der Betrieb elektrischer Geräte, die rotierende Geräteteile vorsehen, die mit Strom und überdies zur Ansteuerung mit Datenströmen versorgt werden müssen, bedürfen einer Kontakttechnik, die weitgehend rotationsunabhängig ist.

Beispielsweise seien Radaranlagen genannt, die rotierende Radarantennen aufweisen, die drehbar auf einem feststehenden Unterbau gelagert sind. Die für den Betrieb derartiger Anlagen erforderlichen Versorgungsleitungen, über die die Stromversorgung ermöglicht wird sowie die Sende- und Empfangssignale geleitet werden, sind an einer Trennstelle zwischen dem feststehenden und dem sich drehenden Teil über konventionelle Schleifringkontaktbahnen miteinander verbunden.

Neben den mechanischen Schleifringkontaktbahnen sind sogenannte optische Schleifringsysteme bekannt, die im Wege der Lichtübertragung zwischen einem Lichtsender und einem Lichtempfänger Informationssignale übertragen.

Beispiele aus der Medizintechnik, insbesondere aus dem Bereich der Computertomographie sind bekannt, die beispielsweise an einem feststehenden Geräteteil, das um eine Patientenliege angeordnet ist, eine zu einem Kreis gebogene Lichtleitfaser aufweist, die mit einem Ende mit einer Lichtdetektoreinheit verbunden ist. Der Lichtleitfaser gegenüberliegend ist eine Lichtsendeeinheit an einem sich um die Patientenliege drehenden Trägerring angeordnet. Die Drehung des Trägerings erfolgt derart, daß die Lichtsendeeinheit stets der gebogenen Lichtleitfaser gegenüberligend verläuft. Auf diese Weise können Lichtsignale während der gesamten Drehung von der Lichtempfangseinheit empfangen werden ohne, daß die kinematischen Eigenschaften der Gesamtaparatur durch die Datenübertragung behindert wäre.

Hierzu sei auf die europäische Patentanmeldung EP 0 381 786 hingewiesen. Die Lichtleitfaser weist fluoreszierendes Material auf, das bei Bestrahlung durch die Lichtsendeeinheit innerhalb der Faser Fluoreszenzlicht erzeugt, das durch die Lichtleitfaser übertragern wird.

Mit Hilfe dieser bekannten Technik ist es möglich, modulierte Lichtsignale, deren Modulation auch im Fluoreszenzlicht erhalten bleibt, unter Verwendung geeigneter Detektionshilfen zur Informationsübertragung zu verwenden.

Es sind gattungsgemäße Empfangseinrichtungen bekannt, die zur Lichtabsorption und zur Erzeugung geeigneten Fluoreszenzlichtes Lichtleitfasern vorsehen, die mit fluoreszierenden Material versetzt sind und entsprechend den Bahnverläufen, über die die Informationssignale übermittelt werden sollen, gebogen sind. Diese Art der Lichtleitfaseranordnung hat jedoch den Nachteil, daß insbesondere an Stellen großer Krümmungen die Lichtleitfaser stark mechanisch verformt ist, so daß in der Faser hohe innere Spannungen auftreten. Insbesondere der Langzeitbetrieb mit gebogenen Lichtleitfasern kann zu inneren Beschädigungen und Brüchen im Material führen. Aufwendige Reparaturen sind hierbei die Folge, die zuweilen den sehr kostenaufwendigen Betrieb von beispielsweise Computertomographieanlagen unterbrechen.

An Stellen, an denen die Biegeradien der zu verformenden Lichtleitfaser klein sind, was vornehmlich bei kleineren Bauteilen der Fall ist, wird ferner die Einsatzmöglichkeit von Lichtleitfasern für den vorbeschriebenen Fall durch die Bruchgefahr erheblich eingeschränkt.

Eine bekannte gattungsgemäße Vorrichtung geht aus der japanischen Druckschrift JP-A-3094206 hervor die zur Informationsübertragung von optischen Signalen eine Sendeund Empfangseinheit vorsieht, wobei beide Einheiten gegeneinander drehbeweglich angeordnet sind. Die Empfangseinheit weist jedoch eine zu einem Kreis gebogene Lichtleitfaser auf, in der die vorstehend beschriebenen inneren mechanischen Spannungen vorherrschen.

### Darstellung der Erfindung

Es besteht daher die Aufgabe, zur Übertragung von Informationen mit Hilfe optischer Signale zwischen einer Sende- und einer Empfangseinheit, die relativ zueinander bewegbar sind, ein das Sendelicht aufnehmenden Empfangskörper herzustellen, der die Ausbildung weitgehend beliebiger Formen erlaubt, ohne daß sich die Gefahr von Materialbeschädigungen einstellt, wie sie bei der Verwendung an sich bekannter Lichtleitfasern besteht.

Die Lösung der der Erfindung zugrundliegenden Aufgabe ist im Anspruch 1 angegeben. Vorteilhafte Ausführungsformen sind den Unteransprüchen 2 ff. zu entnehmen.

Erfindungsgemäß weist eine Vorrichtung zur Informationsübertragung mit optischen Signalen zwischen einer Sende- und einer Empfangseinheit gemäß dem Oberbegriff des Anspruchs 1 einen Materialstrang zur Absorption der von der Sendeeinheit aufgesandten optischen Informationssignale und Weiterleitung der durch Fluoreszenzeffekte umgewandelten Lichtsignale zu einer entsprechenden Detektoreinheit, auf, dessen Kontur an den Bahnverlauf der Sendeeinheit in entsprechend angepaßter Weise vorgefertigt ist und somit keine inneren Spannungen aufweist.

Der Erfindung liegt die Idee zugrunde, daß die an sich bekannte gebogene Lichtleitfaser durch einen Materialstrang ersetzt ist, der keine inneren Spannungen aufweist, da dieser an die erforderlichen Geometrien durch entsprechende Vorbearbeitung angepaßt ist. Die Kontur des Materialstrangs richtet sich in erster Linie nach der Bewegungsbahn bzw. Trajektorie der Sendeeinheit, die gebogen oder geradlinig verlaufen kann.

Beispielsweise ist ein erfindungsgemäßer Materialstrang aus einem geeigneten Flächenmaterial, das über fluoreszierende Eigenschaften verfügt derart herauszuarbeiten, so daß der Materialstrang eine ringförmige Außenkontur und einen weitgehend rechteckigen Querschnitt aufweist. Ein derartiger Ring ist in dieser Gestalt in eine entsprechend ausgebildete Ausnehmung in einem Geräteteil einzubringen, das vorzugsweise aus Aluminium oder-Kupfer besteht und dessen Ausnehmung mit einem Diamantwerkzeug herausgearbeitet worden ist. Durch die Bearbeitung des vorgenannten Geräteteils mit Hilfe eines Diamantwerkzeuges wird zugleich eine hoch reflektierende Oberfläche an der Ausnehmung gewonnen. In diese Ausnehmung ist der ringförmige Materialstrang einzusetzten, so daß dieser zumindest teilweise von einer hoch reflektierenden Oberfläche umgeben ist.

Wird der Materialstrang einseitig mit dem von der Sendeeinheit stammenden Licht beaufschlagt, so wird das dabei entstehende Fluoreszenzlicht zumindest an den hoch reflektierenden Flächen nahezu verlustfrei in den Materialstrang zurückreflektiert, um an einer geeigneten Stelle einen Detektor zu erreichen.

Alternativ zur Verwendung der vorstehend beschriebenen Materialstränge ist es möglich, eine vorgefertigte, mit einem weitgehend beliebigen Bahnverlauf gearbeitete Vertiefung mit einem gießfähigen, Fluoreszenzeigenschaften verfügende Masse auszufüllen, die nach Erstarren die vorgeschilderten absorbierenden und fluoreszierenden Eigenschaften besitzt.

In Abhängigkeit der Anzahl der Sendeeinheiten sind ferner mehrere Materialstränge nebeneinander anzuordnen, die getrennt voneinander eine Vielzahl von Informationskanäle zwischen zwei sich bewegenden Körpern, ermöglichen.

## Patentansprüche

1. Vorrichtung zur Informationsübertragung mit einer Sende- und einer Empfangseinheit, zwischen denen optische Signale übertragen werden und die relativ zueinander bewegbar sind, daß die Empfangseinheit entlang der sich durch die Relativbewegung der Sendeeinheit ergebenden Trajektorie ausgebildet ist und wenigstens einen, die optischen Signale in Fluoreszenzlicht umsetzenden Materialstrang aufweist, der mit einer Detektoreinheit verbunden ist, so daß die auf die Materialstrangoberfläche auftreffenden optischen Signale innerhalb des Materialstrangs Floreszlichtsignale hervorrufen, die im Wege einer internen Lichtführung zu einer Detektoreinheit leitbar sind,
dadurch **gekennzeichnet,** daß der Materialstrang keine inneren mechanischen Spannungen aufweist und eine der Trajektorie der Sendeeinheit angepasste, vorgefertigte Kontur aufweist.

2. Vorrichtung nach Anspruch 1,
dadurch **gekennzeichnet,** daß der Materialstrang einstückig aus einem Flächenmaterial gearbeitet ist.

3. Vorrichtung nach Anspruch 1 oder 2, mit einem Geräteteil an dem die Empfangseinheit einbringbar ist,
dadurch **gekennzeichnet**, daß das Material des Materialstrangs in einem gießfähigem Zustand in eine Ausnehmung des Geräteteils einbringbar ist und formgetreu erstarrt.

4. Vorrichtung nach Anspruch 3,
dadurch **gekennzeichnet,** daß die Ausnehmung des Geräteteils Wandungen aufweist, die das Fluoreszenslicht im wesentlichen verlustarm reflektieren.

5. Vorrichtung nach Anspruch 3 oder 4,
dadurch **gekennzeichnet**, daß das Geräteteil Aluminium oder Messing aufweist.

## Claims

1. Device for transmitting information, including a transmitting and receiving unit between which optical signals are transmitted and which are adapted for mutually relative movement, wherein the receiving unit is configured along the trajectory created by the relative movement of the transmitting unit and comprises at least one material strand converting the optical signals into fluorescent light, which is connected to a detector unit such that the optical signals impinging on the surface of said material strand will provoke fluorescent light signals within the material strand, which can be passed on by way of internal light guidance to a detector unit, **characterised** in that said material strand does not present any internal mechanical stress and has a prefabricated contour matched with the trajectory of said transmitting unit.

2. Device according to Claim 1,
**characterised** in that said material strand is integrally formed of a flat material.

3. Device according to Claim 1 or 2, comprising a unit section on which said transmitting unit may be included,
**characterised** in that the material of said material strand is suitable for accommodation in a recess of said unit section in a castable state and solidifies there in a form true to shape.

4. Device according to Claim 3,
**characterised** in that the recess of said unit section has walls providing for a substantially low-loss reflection of the fluorescent light.

5. Device according to Claim 3 or 4,
**characterised** in that said unit section contains aluminium or brass.

## Revendications

1. Dispositif à transmettre de l'information, comprenant une unité émettrice et une unité réceptrice, entre lesquelles des signaux optiques sont transmis et qui sont appropriées à un mouvement mutuellement relatif, dans lequel ladite unité réceptrice est configurée le long d'une trajectoire créée par le mouvement relatif de l'unité émettrice et comprend au moins un corps filé de matière qui convertit les signaux optiques en lumière fluorescente, qui est relié à une unité détectrice de façon que les signaux optiques, qui sont incidents sur la surface dudit corps filé de matière, provoqueront des signaux lumineux fluorescents à l'intérieur dudit corps filé de matière, qui sont aptes à être passés par voie de guidage de lumière intérieur vers une unité détectrice, **caractérisé** en ce que ledit corps filé de matière ne présente pas aucune contrainte mécanique interne, et a un contour préfabriqué adapté à la trajectoire de ladite unité émettrice.

2. Dispositif selon la revendication 1,
**caractérisé** en ce que ledit corps filé de matière est intégralement formé d'un matériel en nappe.

3. Dispositif selon la revendication 1 or 2, comprenant une partie d'unité sur laquelle on peut incorporer ladite unité émettrice,
**caractérisé** en ce que la matière dudit corps filé de matière est appropriée à être reçue dans un évidement de ladite partie d'unité en état coulable et s'y solidifie en forme exacte.

4. Dispositif selon la revendication 3,
**caractérisé** en ce que l'évidement de ladite partie d'unité présente des parois qui permettent une réflexion peu réfléchissante de la lumière fluorescente.

5. Dispositif selon la revendication 3 ou 4,
**caractérisé** en ce que ladite partie d'unité contient de l'aluminium ou du laiton.
